# EUROPEAN PATENT APPLICATION

(11) **EP 3 838 548 A1**
(43) Date of publication of application: **23.06.2021**
(21) Application number: 20213912.7
(22) Date of filing: 14.12.2020
(51) Int. Cl.: B29C 45/16, B29C 45/64, B29C 45/43, B29L 9/00, B29C 45/14, B29C 45/42

(54) **MULTI-MATERIAL INJECTION MOLDING MACHINE AND MULTI-MATERIAL INJECTION MOLDING METHOD THEREOF**

(30) Priority: 19.12.2019 CN 201911320050
(71) Applicant: Yizumi Precision Machinery (Suzhou) Co., Ltd, Wujiang, Jiangsu (CN)
(72) Inventor: ZHANG, Tao, Wujiang, Jiangsu (CN); KUANG, Tianzhi, Wujiang, Jiangsu (CN); HOU, Yongping, Wujiang, Jiangsu (CN)
(74) Representative: Patentwerk B.V.

(57) **Abstract**

The present invention discloses a multi-material injection molding machine and a multi-material injection molding method thereof. The injection molding machine comprises an injection unit, a fixed plate, a moving plate, a fixed injection molding die holder, a moving injection molding die holder, a fixed PU molding die holder and a moving PU molding die holder, wherein the fixed plate is connected with the moving plate via a guide assembly; the fixed injection molding die holder and the fixed PU molding die holder are arranged on the fixed plate, and the moving injection molding die holder is arranged on the moving plate and opposite to the fixed injection molding die holder; at least one fixed PU molding die holder is provided; the moving PU molding die holder is arranged on the moving plate, at least one moving PU molding die holder is arranged, and the moving PU molding die holders are in one-to-one correspondence with the corresponding fixed PU molding die holders; an output end of the injection unit is in communicative connection with the fixed injection molding die holder and the fixed PU molding die holder respectively; a first fixture is arranged between the fixed PU molding die holder and the moving PU molding die holder; and a second fixture is arranged between the moving PU molding die holder and the moving plate. The present invention aims to provide a multi-material injection molding machine and a multi-material injection molding method thereof, which can perform injection molding and PU layer injection molding in the same equipment, and realize continuous production through the cooperation of a plurality of sets of die holders, so as to improve production efficiency.

## Description

### FIELD

The present invention relates to the technical field of injection molding equipment, in particular to a multi-material injection molding machine and a multi-material injection molding method thereof.

### BACKGROUND

The requirements for the color, tactile impression and intelligence of automotive upholstery become higher and higher. As a "smart" material, polyurethane has been applied in the preparation of interior parts such as instrument panels, center consoles, door panels as well as smart home appliances owing to its characteristics such as flexibility, durability, scratch resistance and self-healing as well as its advantages such as free color collocation, fresh and lovely luster and friendliness to "smart inserts", and is used increasingly year by year. The existing injection molding equipment usually employs a one-time injection molding process, and the semi-finished injection-molded parts have to be transferred to other production equipment for processing of a PU layer. Such a separate processing production scheme requires an additional processing line of PU layer, which results in an excessively long production line and severe space occupation; besides, since the semi-finished injection-molded parts have to be transported manually, the labor intensity of the workers is increased.

### SUMMARY

The object of the present invention is to provide a multi-material injection molding machine and a multi-material injection molding method thereof, which can perform injection molding and PU layer injection molding in the same equipment, and realize continuous production through the cooperation of a plurality of sets of die holders, so as to improve production efficiency.
To attain the above object, the present invention employs the following technical scheme: a multi-material injection molding machine, comprising an injection unit, a fixed plate, a moving plate, a fixed injection molding die holder, a moving injection molding die holder, a fixed PU molding die holder and a moving PU molding die holder, wherein
the fixed plate is connected with the moving plate via a guide assembly;
the fixed injection molding die holder and the fixed PU molding die holder are arranged on the fixed plate, and the moving injection molding die holder is arranged on the moving plate and opposite to the fixed injection molding die holder;
at least one fixed PU molding die holder is provided;
the moving PU molding die holder is arranged on the moving plate, at least one moving PU molding die holder is arranged, and the moving PU molding die holders are in one-to-one correspondence with the corresponding fixed PU molding die holders;
an output end of the injection unit is in communicative connection with the fixed injection molding die holder and the fixed PU molding die holder respectively;
a first fixture is arranged between the fixed PU molding die holder and the moving PU molding die holder, and is configured to connect or open the corresponding fixed PU molding die holder and moving PU molding die holder; and
a second fixture is arranged between the moving PU molding die holder and the moving plate, and is configured to connect or open the corresponding moving PU molding die holder and the moving plate.
Preferably, the fixed PU molding die holder comprises a first fixed PU molding die holder and a second fixed PU molding die holder, and the moving PU molding die holder comprises a first moving PU molding die holder and a second moving PU molding die holder.
Preferably, the injection unit comprises a molding injection mechanism and a PU injection mechanism, wherein an output end of the molding injection mechanism is in communicative connection with the fixed injection molding die holder, and an output end of the PU injection mechanism is in communicative connection with each fixed PU molding die holder.
Preferably, the fixed PU molding die holder is connected with a compressed air source configured to vacuumize the fixed PU molding die holder or introduce compressed air into the fixed PU molding die holder.
Preferably, an ejector pin for ejecting an injection-molded part is arranged in the fixed injection molding die holder; and a manipulator for moving the injection-molded part is provided on a side edge of the fixed plate.
A multi-material injection molding method, comprising the following steps:
step S1: moving the moving plate for mold closing for a first time, so that the fixed injection molding die holder and the moving injection molding die holder cooperate with each other to form an injection molding cavity, and the molding injection mechanism and the fixed injection molding die holder cooperate with each other to perform injection into the injection molding cavity so as to form an injection-molded part a;
step S2: moving the moving plate for mold opening for a first time, and moving the injection-molded part a to the first fixed PU molding die holder;
step S3: moving the moving plate for mold closing for a second time, so that the molding injection mechanism and the fixed injection molding die holder cooperate with each other to perform injection into the injection molding cavity so as to form an injection-molded part b; and
   the first fixed PU molding die holder, the injection-molded part a and the first moving PU molding die holder cooperate with each other to form a first PU molding cavity, and the PU injection mechanism and the first fixed PU molding die holder cooperate with each other to perform injection to the surface of the injection-molded part a in the first PU molding cavity so as to form a PU layer;
   connecting the first fixture between the first fixed PU molding die holder and the first moving PU molding die holder, and opening the second fixture between the first moving PU molding die holder and the moving plate;
   opening the first fixture between the second fixed PU molding die holder and the second moving PU molding die holder, and connecting the second fixture between the second moving PU molding die holder and the moving plate;
step S4: moving the moving plate for mold opening for a second time, and moving the injection-molded part b to the second fixed PU molding die holder;
step S5: moving the moving plate for mold closing for a third time, so that the molding injection mechanism and the fixed injection molding die holder cooperate with each other to perform injection into the injection molding cavity so as to form an injection-molded part a'; and
   the second fixed PU molding die holder, the injection-molded part b and the second moving PU molding die holder cooperate with each other to form a second PU molding cavity, and the PU injection mechanism and the second fixed PU molding die holder cooperate with each other to perform injection to the surface of the injection-molded part b in the second PU molding cavity so as to form a PU layer; connecting the first fixture between the second fixed PU molding die holder and the second moving PU molding die holder, and opening the second fixture between the second moving PU molding die holder and the moving plate;
   opening the first fixture between the first fixed PU molding die holder and the first moving PU molding die holder, and connecting the second fixture between the first moving PU molding die holder and the moving plate;
step S6: moving the moving plate for mold opening for a third time, moving out the injection-molded part a and moving the injection-molded part a' to the first fixed PU molding die holder;
step S7: repeating the steps S3∼S6.
Preferably, in the step S2, step S4 or step S6, the compressed air source operates to vacuumize the first fixed PU molding die holder or the second fixed PU molding die holder, so as to maintain the first PU molding cavity or the second PU molding cavity in a vacuum state to adsorb the corresponding injection-molded part a, b or a'.
Preferably, in the step S3 or step S5, the compressed air source operates to introduce compressed air into the first fixed PU molding die holder or the second fixed PU molding die holder, so as to maintain the molding pressure in the first PU molding cavity or the second PU molding cavity.
Preferably, in the step S2, step S4 or step S6, the injection-molded part a, the injection-molded part b or the injection-molded part a' is ejected by means of the ejector pin; and the movement of the injection-molded part a, the injection-molded part b or the injection-molded part a' is manipulated by the manipulator. Preferably, in the step S2, the injection-molded part a is moved to an external storage place, and the steps S1∼S2 are repeated.
In the present invention, with the above structure, the fixed injection molding die holder and the moving injection molding die holder cooperate with each other to realize injection molding of the injection-molded part, and work with the fixed PU molding die holder and the moving PU molding die holder to realize reaction molding of the injection-molded part and the PU layer, so that injection molding and PU in-mold spraying are realized in a one-step process. Thus, the traditional surface spraying process is replaced by a process having higher economic efficiency, the investment of the production equipment is reduced, and the production efficiency is improved. With a plurality of sets of fixed die holders and moving die holders that cooperate with each other, continuous production can be carried out, and injection molding and PU spraying can be performed in a continuous mold closing and mold opening process, thus the production efficiency is greatly improved.

### BRIEF DESCRITION OF THE DRAWINGS

The accompanying drawings further illustrate the present invention, but the contents in the accompanying drawings do not constitute any limitation to the present invention.
Fig. 1 is a schematic structural diagram of the multi-material injection molding machine according to the present invention;
Fig. 2 is a structural schematic diagram of the multi-material injection molding machine in the first mold closing process in the step S1 in the present invention;
Fig. 3 is a structural schematic diagram of the multi-material injection molding machine in the first mold opening process in the step S2 in the present invention;
Fig. 4 is a structural schematic diagram of the multi-material injection molding machine in the second mold closing process in the step S3 in the present invention;
Fig. 5 is a structural schematic diagram of the multi-material injection molding machine in the second mold opening process in the step S4 in the present invention;
Fig. 6 is a structural schematic diagram of the multi-material injection molding machine in the third mold closing process in the step S5 in the present invention;
Fig. 7 is a structural schematic diagram of the multi-material injection molding machine in the third mold opening process in the step S6 in the present invention.
In the figures: 1 - injection unit, 1a - injection molding injector, 1b - PU molding injector, 3 - fixed plate; 4 - moving plate; 5 - fixed injection molding die holder; 6 - moving injection molding die holder; 7 - fixed PU molding die holder, 7a - first fixed PU molding die holder, 7b - second fixed PU molding die holder; 8 - moving PU molding die holder, 8a - first moving PU molding die holder, 8b - second moving PU molding die holder; 9 - ejector pin.

### DETAILED DESCRIPTION

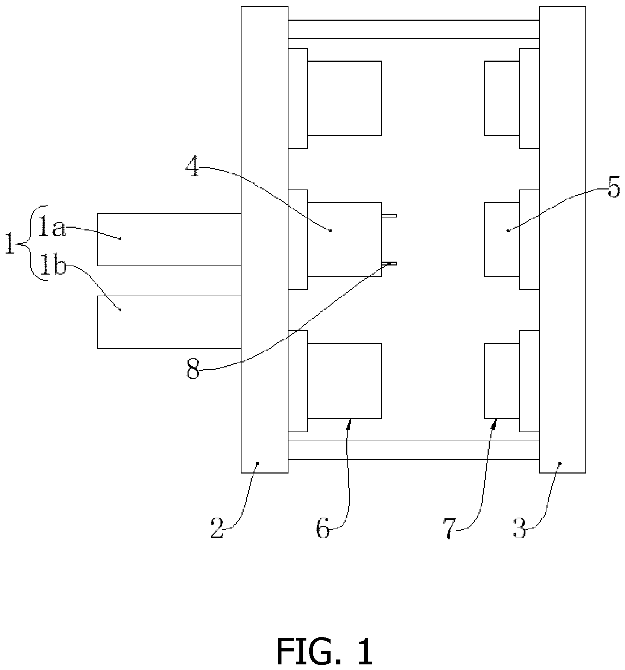

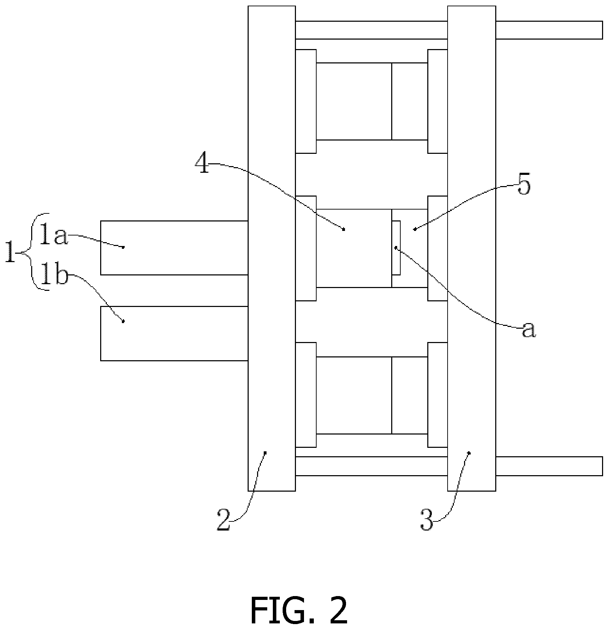

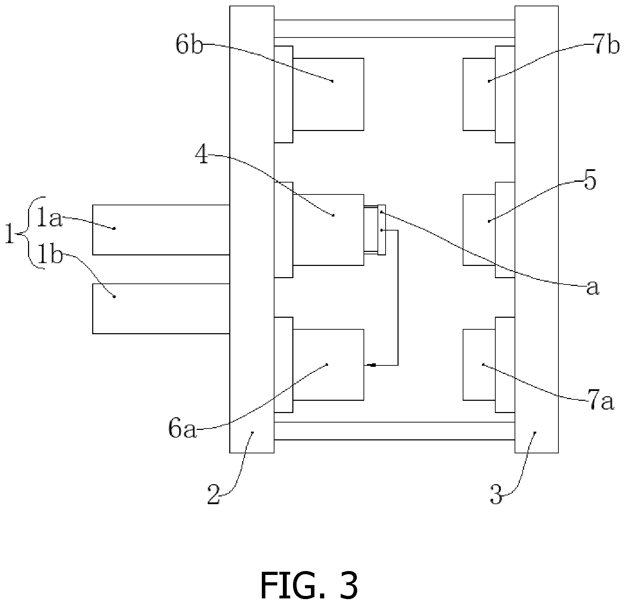

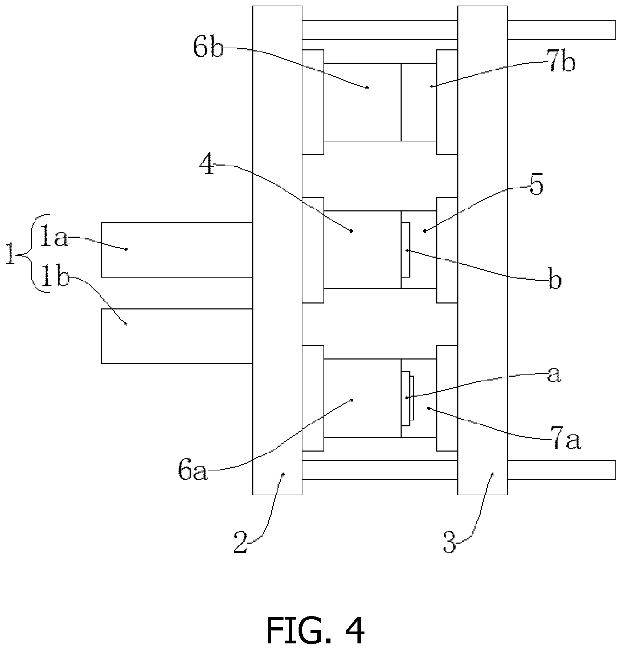

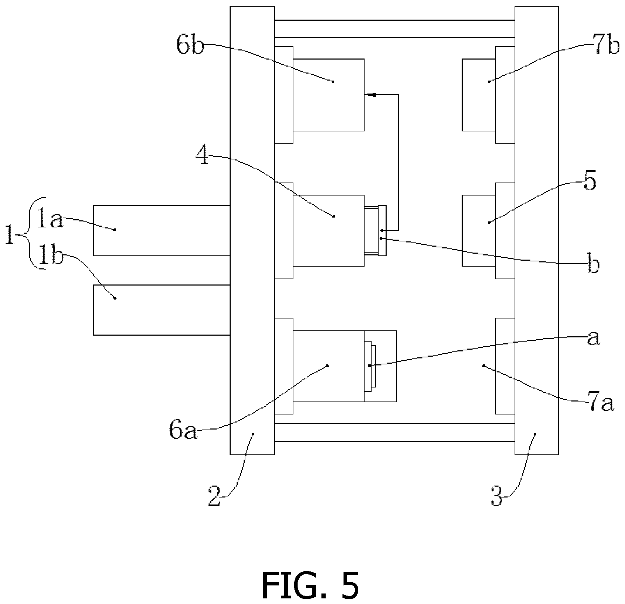

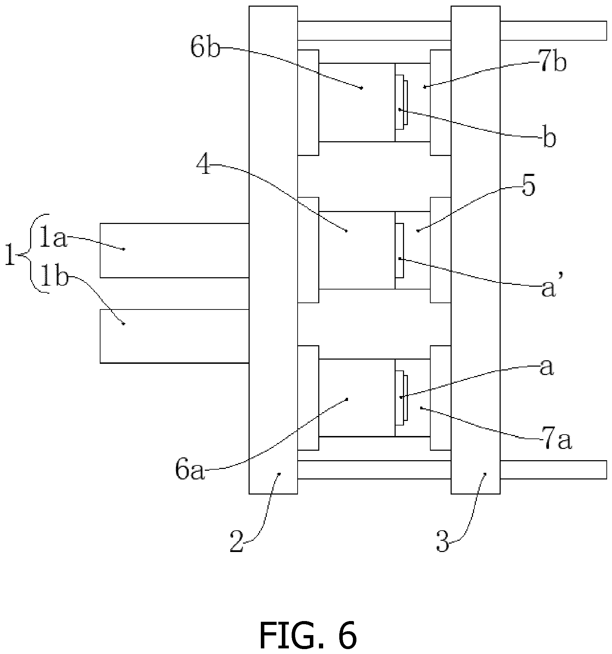

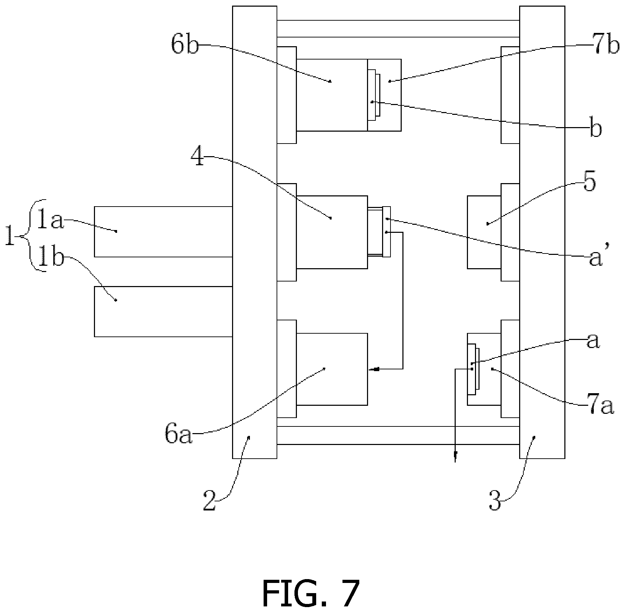

Hereunder the technical scheme of the present invention will be further detailed in specific embodiments with reference to the accompanying drawings. Please see Figs. 1-7. The multi-material injection molding machine in this embodiment comprises an injection unit 1, a fixed plate 3, a moving plate 4, a fixed injection molding die holder 5, a moving injection molding die holder 6, a fixed PU molding die holder 7, and a moving PU molding die holder 8, wherein the fixed plate 3 is connected with the moving plate 4 via a guide assembly; the fixed injection molding die holder 5 and the fixed PU molding die holder 7 are arranged on the fixed plate 3, and the moving injection molding die holder 6 is arranged on the moving plate 4 and opposite to the fixed injection molding die holder 5.
At least one fixed PU molding die holder 7 is provided.
The moving PU molding die holder 8 is arranged on the moving plate 4, at least one moving PU molding die holder 8 is arranged, and the moving PU molding die holders 8 are in one-to-one correspondence with the corresponding fixed PU molding die holders 7.
An output end of the injection unit 1 is in communicative connection with the fixed injection molding die holder 5 and the fixed PU molding die holder 7 respectively. A first fixture is arranged between the fixed PU molding die holder 7 and the moving PU molding die holder 8, and is configured to connect or open the corresponding fixed PU molding die holder 7 and moving PU molding die holder 8. A second fixture is arranged between the moving PU molding die holder 8 and the moving plate 4, and is configured to connect or open the corresponding moving PU molding die holder 8 and the moving plate 4.
With such a structure, the fixed injection molding die holder 5 and the moving injection molding die holder 6 cooperate with each other to realize injection molding of the injection-molded part, and work with the fixed PU molding die holder 7 and the moving PU molding die holder 8 to realize reaction molding of the injection-molded part and the PU layer, so that injection molding and PU in-mold spraying are realized in a one-step process. Thus, the traditional surface spraying process is replaced by a process having higher economic efficiency, the investment of the production equipment is reduced, and the production efficiency is improved. With at least one set of fixed PU molding die holder 7 and moving PU molding die holder 8 that cooperate with each other, the processing and production become more convenient. The injection-molded part formed by the fixed injection molding die holder 5 is transferred to the fixed PU molding die holder 7 for PU spraying. Injection molding and PU spraying can be performed in the mold closing and mold opening process, thus the production efficiency is greatly improved.
The present invention has the following advantages: the environmental pollution caused by spraying is avoided, and the process is more environment-friendly; the product molding steps are reduced and the molding cycle is shortened; PU products in thickness down to 0.3mm can be produced, thus the molding requirements are met better, the yield is improved, and the cost is reduced; it is unnecessary to add any releasing agent separately in the entire process; compared with the mechanical turntable technique, the technique in the present invention requires less investment; the surface of the product made of PU material has high quality and high gloss, is insusceptible to the external environment, has high environmental adaptability, and is resistant to scratching and chemical corrosion and self-healing; the product is suitable for upgrading of automotive upholstery such as dashboards, door panels, central control panels and pillars A/B/C/D, etc., can bring better quality and high-grade feeling for the automotive upholstery; in addition, the product also has great application potential in the field of 3C products and home appliances, and its high surface gloss and self-healing properties can bring more possibilities for product design.
In this embodiment, the first fixture is preferably a wedge-shaped fixture, and the second fixture is preferably a swing fixture. The structures of the first fixture and the second fixture belong to the prior art, and will not be described further in detail here. The function of the first fixture is to connect or open the corresponding fixed die holder and moving die holder, which can provide a molding cavity when they are connected and can facilitate the removal of the injection-molded part when they are opened; the second fixture is used to connect or open the corresponding moving die holder and the moving plate 4, and cooperates with the first fixture. Preferably, the fixed PU molding die holder 7 comprises a first fixed PU molding die holder 7a and a second fixed PU molding die holder 7b, and the moving PU molding die holder 8 comprises a first moving PU molding die holder 8a and a second moving PU molding die holder 8b.
In this embodiment, the first fixed PU molding die holder 7a and the second fixed PU molding die holder 7b have the same structure, and the first moving PU molding die holder 8a and the second moving PU molding die holder 8b have the same structure. Two sets of fixed PU molding die holder 7 and moving PU molding die holder 8 that cooperate with each other are provided, so that the operation can be performed at the corresponding fixed PU molding die holder in each mold closing or mold opening process, thus the production efficiency is improved.
Preferably, the injection unit 1 comprises an injection molding injector 1a and a PU molding injector 1b, wherein an output end of the injection molding injector 1a is in communicative connection with the fixed injection molding die holder 5, and an output end of the PU molding injector 1b is in communicative connection with each fixed PU molding die holder 7.
The injection molding injector 1a and the PU molding injector 1b have the same structure as the injection molding machines commonly used in the art. Therefore, they will not be detailed further here. In this embodiment, an injection-molded part is formed through cooperation among the injection molding injector 1a, the fixed injection molding die holder 5 and the moving injection molding die holder 6, and a PU layer is formed through cooperation among the PU molding injector 1b, the fixed PU molding die holder 7 and the corresponding moving PU molding die holder 8. The two injectors are independent of each other and do not interfere with each other, thus ensuring the injection effect.
Preferably, the fixed PU molding die holder 7 is connected with a compressed air source configured to vacuumize the fixed PU molding die holder 7 or introduce compressed air into the fixed PU molding die holder 7.
With such a structure, in order to improve the fixing effect of the fixed PU molding die holder 7 on the injection-molded part, the fixed PU molding die holder 7 is vacuumized by means of the compressed air source when the injection-molded part is fixed, so that the fixed PU molding die holder 7 can absorb the injection-molded part.
In order to ensure the molding effect of the PU layer in the fixed PU molding die holder 7, compressed air is introduced into the fixed PU molding die holder 7 to maintain the molding pressure after the PU is injected.
Preferably, an ejector pin 9 for ejecting an injection-molded part is arranged in the fixed injection molding die holder 5.
With such a structure, the ejector pin 9 arranged inside the fixed injection molding die holder 5 can conveniently eject the injection molded part.
Preferably, a manipulator for moving the injection-molded part is provided on a side edge of the fixed plate 3.
With such a structure, in order to facilitate the removal of the injection-molded part, a manipulator is arranged on a side of the fixed plate 3. The structure of the manipulator is well-known in the prior art, and will not be detailed further here.
A multi-material injection molding method, comprising the following steps:
step S1: moving the moving plate 4 for mold closing for a first time, so that the fixed injection molding die holder 5 and the moving injection molding die holder 6 cooperate with each other to form an injection molding cavity, and the injection molding injector 1a and the fixed injection molding die holder 5 cooperate with each other to perform injection into the injection molding cavity so as to form an injection-molded part a;
step S2: moving the moving plate 4 for mold opening for a first time, and moving the injection-molded part a to the first fixed PU molding die holder 7a;
step S3: moving the moving plate 4 for mold closing for a second time, so that the injection molding injector 1a and the fixed injection molding die holder 5 cooperate with each other to perform injection into the injection molding cavity so as to form an injection-molded part b; and
   the first fixed PU molding die holder 7a, the injection-molded part a and the first moving PU molding die holder 8a cooperate with each other to form a first PU molding cavity, and the PU molding injector 1b and the first fixed PU molding die holder 7a cooperate with each other to perform injection to the surface of the injection-molded part a in the first PU molding cavity so as to form a PU layer; connecting the first fixture between the first fixed PU molding die holder 7a and the first moving PU molding die holder 8a, and opening the second fixture between the first moving PU molding die holder 8a and the moving plate 4;
   opening the first fixture between the second fixed PU molding die holder 7b and the second moving PU molding die holder 8b, and connecting the second fixture between the second moving PU molding die holder 8b and the moving plate 4;
step S4: moving the moving plate 4 for mold opening for a second time, and moving the injection-molded part b to the second fixed PU molding die holder 7b;
step S5: moving the moving plate 4 for mold closing for a third time, so that the injection molding injector 1a and the fixed injection molding die holder 5 cooperate with each other to perform injection into the injection molding cavity so as to form an injection-molded part a'; and
   the second fixed PU molding die holder 7b, the injection-molded part b and the second moving PU molding die holder 8b cooperate with each other to form a second PU molding cavity, and the PU molding injector 1b and the second fixed PU molding die holder 7b cooperate with each other to perform injection to the surface of the injection-molded part b in the second PU molding cavity so as to form a PU layer;
   connecting the first fixture between the second fixed PU molding die holder 7b and the second moving PU molding die holder 8b, and opening the second fixture between the second moving PU molding die holder 8b and the moving plate 4; opening the first fixture between the first fixed PU molding die holder 7a and the first moving PU molding die holder 8a, and connecting the second fixture between the first moving PU molding die holder 8a and the moving plate 4;
step S6: moving the moving plate 4 for mold opening for a third time, moving out the injection-molded part a and moving the injection-molded part a' to the first fixed PU molding die holder 7a;
step S7: repeating the steps S3∼S6.
With such a structure, through the steps S1∼S6, after an injection-molded part is formed in the fixed injection molding die holder 5 by injection molding, the injection-molded part is moved into the fixed PU molding die holder for in-mold spraying, so that a PU layer is formed on the surface of the injection-molded part. Thus, by performing injection molding and PU injection in the same equipment, the investment of the production equipment is reduced, the length of the production line is shortened, the production efficiency is improved, and the labor intensity of the workers is decreased. Through the cooperation between one molding injection module and two PU injection modules, injection molding and PU injection can be carried out continuously. An injection molding part can be formed by injection molding whenever the fixed plate 3 and the moving plate 4 are closed, and PU layer injection can be carried out for the previous injection-molded part at the same time. Thus, the purpose of continuous production is achieved, and the production efficiency is greatly improved.
In the present invention, the first fixed PU molding die holder 7a and the second fixed PU molding die holder 7b have the same structure. When the injection-molded part is moved, a selection may be made to move the injection-molded part to the first fixed PU molding die holder 7a or the second fixed PU molding die holder 7b under the control of the program of the manipulator. Two fixed PU molding die holders are provided, so that the operation can be performed at the corresponding fixed PU molding die holder in each mold closing or mold opening cycle. Thus the production efficiency is improved.
Preferably, in the step S2, step S4 or step S6, the compressed air source operates to vacuumize the first fixed PU molding die holder 7a or the second fixed PU molding die holder 7b, so as to maintain the first PU molding cavity or the second PU molding cavity in a vacuum state to adsorb the corresponding injection-molded part a, b or a'.
With such a structure, by vacuumizing the first PU molding cavity or the second PU molding cavity, the first PU molding cavity or the second PU molding cavity can be maintained in a vacuum state to adsorb the injection-molded part, so that the injection-molded part can be fixed conveniently and prevented from falling off. Preferably, in the step S3 or step S5, the compressed air source operates to introduce compressed air into the first fixed PU molding die holder 7a or the second fixed PU molding die holder 7b, so as to maintain the molding pressure in the first PU molding cavity or the second PU molding cavity.
With such a structure, by introducing compressed air into the first PU molding cavity or the second PU molding cavity, the first PU molding cavity or the second PU molding cavity is maintained at the molding pressure, to facilitate the molding of the PU layer.
Preferably, in the step S2, step S4 or step S6, the injection-molded part a, the injection-molded part b or the injection-molded part a' is ejected by means of the ejector pin 9.
With such a structure, the injection-molded part is ejected by the ejector pin 9, so that the manipulator can move the injection-molded part conveniently.
Preferably, in the step S2, step S4 or step S6, the movement of the injection-molded part a, the injection-molded part b or the injection-molded part a' is manipulated by the manipulator.
With such a structure, the injection-molded part is manipulated by the manipulator, and thereby the automation of the production is improved. The manipulator is driven under the control of an external program, so that the injection-molded part can be accurately moved from the fixed injection molding die holder 5 to the first fixed PU molding die holder 7a or the second fixed PU molding die holder 7b, or the finished injection-molded part can be moved from the first fixed PU molding die holder 7a or the second fixed PU molding die holder 7b to an external storage place.
Preferably, in the step S2, the injection-molded part a is moved to an external storage place, and the steps S1∼S2 are repeated.
With such a structure, PU injection is not carried out in this operating mode, and the injection-molded part a is removed by the worker manually or by a manipulator, and more injection-molded parts are continuously manufactured by repeating the steps S1 and S2.
The technical principle of the present invention is described above in specific embodiments. The description is only for the purpose of explaining the principle of the present invention, and should not be interpreted as constituting any limitation to the scope of protection of the present invention in any way. Based on the description herein, those skilled in the art can conceive of various other specific embodiments of the present invention without expending any creative labor, but all of such specific embodiments shall be deemed as falling in the scope of protection of the present invention.

## Claims

1. A multi-material injection molding machine, comprising an injection unit, a fixed plate, a moving plate, a fixed injection molding die holder, a moving injection molding die holder, a fixed PU molding die holder and a moving PU molding die holder, wherein
the fixed plate is connected with the moving plate via a guide assembly;
the fixed injection molding die holder and the fixed PU molding die holder are arranged on the fixed plate, and the moving injection molding die holder is arranged on the moving plate and opposite to the fixed injection molding die holder;
at least one fixed PU molding die holder is arranged;
the moving PU molding die holder is arranged on the moving plate, at least one moving PU molding die holder is arranged, and the moving PU molding die holders are in one-to-one correspondence with the corresponding fixed PU molding die holders;
an output end of the injection unit is in communicative connection with the fixed injection molding die holder and the fixed PU molding die holder respectively;
a first fixture is arranged between the fixed PU molding die holder and the moving PU molding die holder, and is configured to connect or open the corresponding fixed PU molding die holder and moving PU molding die holder; and
a second fixture is arranged between the moving PU molding die holder and the moving plate, and is configured to connect or open the corresponding moving PU molding die holder and the moving plate.

2. The multi-material injection molding machine according to claim 1, wherein the fixed PU molding die holder comprises a first fixed PU molding die holder and a second fixed PU molding die holder, and the moving PU molding die holder comprises a first moving PU molding die holder and a second moving PU molding die holder.

3. The multi-material injection molding machine according to claim 1 or 2, wherein the injection unit comprises a molding injection mechanism and a PU injection mechanism, wherein an output end of the molding injection mechanism is in communicative connection with the fixed injection molding die holder, and an output end of the PU injection mechanism is in communicative connection with each fixed PU molding die holder.

4. The multi-material injection molding machine according to any of the foregoing claims, wherein the fixed PU molding die holder is connected with a compressed air source configured to vacuumize the fixed PU molding die holder or introduce compressed air into the fixed PU molding die holder.

5. The multi-material injection molding machine according to any of the foregoing claims, wherein an ejector pin for ejecting an injection-molded part is arranged in the fixed injection molding die holder; and a manipulator for moving the injection-molded part is provided on a side edge of the fixed plate.

6. A multi-material injection molding method using the multi-material injection molding machine according to any of claims 1-5, comprising the following steps:
step S1: moving the moving plate for mold closing for a first time, so that the fixed injection molding die holder and the moving injection molding die holder cooperate with each other to form an injection molding cavity, and the molding injection mechanism and the fixed injection molding die holder cooperate with each other to perform injection into the injection molding cavity so as to form an injection-molded part a;
step S2: moving the moving plate for mold opening for a first time, and moving the injection-molded part a to the first fixed PU molding die holder;
step S3: moving the moving plate for mold closing for a second time, so that the molding injection mechanism and the fixed injection molding die holder cooperate with each other to perform injection into the injection molding cavity so as to form an injection-molded part b; and
the first fixed PU molding die holder, the injection-molded part a and the first moving PU molding die holder cooperate with each other to form a first PU molding cavity, and the PU injection mechanism and the first fixed PU molding die holder cooperate with each other to perform injection to the surface of the injection-molded part a in the first PU molding cavity so as to form a PU layer;
connecting the first fixture between the first fixed PU molding die holder and the first moving PU molding die holder, and opening the second fixture between the first moving PU molding die holder and the moving plate;
opening the first fixture between the second fixed PU molding die holder and the second moving PU molding die holder, and connecting the second fixture between the second moving PU molding die holder and the moving plate;
step S4: moving the moving plate for mold opening for a second time, and moving the injection-molded part b to the second fixed PU molding die holder;
step S5: moving the moving plate for mold closing for a third time, so that the molding injection mechanism and the fixed injection molding die holder cooperate with each other to perform injection into the injection molding cavity so as to form an injection-molded part a'; and
the second fixed PU molding die holder, the injection-molded part b and the second moving PU molding die holder cooperate with each other to form a second PU molding cavity, and the PU injection mechanism and the second fixed PU molding die holder cooperate with each other to perform injection to the surface of the injection-molded part b in the second PU molding cavity so as to form a PU layer;
connecting the first fixture between the second fixed PU molding die holder and the second moving PU molding die holder, and opening the second fixture between the second moving PU molding die holder and the moving plate;
opening the first fixture between the first fixed PU molding die holder and the first moving PU molding die holder, and connecting the second fixture between the first moving PU molding die holder and the moving plate;
step S6: moving the moving plate for mold opening for a third time, moving out the injection-molded part a and moving the injection-molded part a' to the first fixed PU molding die holder;
step S7: repeating the steps S3∼S6.

7. The multi-material injection molding method according to claim 6, wherein in the step S2, step S4 or step S6, the compressed air source operates to vacuumize the first fixed PU molding die holder or the second fixed PU molding die holder, so as to maintain the first PU molding cavity or the second PU molding cavity in a vacuum state to adsorb the corresponding injection-molded part a, b or a'.

8. The multi-material injection molding method according to claim 6 or 7, wherein in the step S3 or step S5, the compressed air source operates to introduce compressed air into the first fixed PU molding die holder or the second fixed PU molding die holder, so as to maintain the molding pressure in the first PU molding cavity or the second PU molding cavity.

9. The multi-material injection molding method according to any of claims 6-8, wherein in the step S2, step S4 or step S6, the injection-molded part a, the injection-molded part b or the injection-molded part a' is ejected by means of the ejector pin; and the movement of the injection-molded part a, the injection-molded part b or the injection-molded part a' is manipulated by the manipulator.

10. The multi-material injection molding method according to any of claims 6-9, wherein in the step S2, the injection-molded part a is moved to an external storage place, and the steps S1~S2 are repeated.
